# EUROPEAN PATENT APPLICATION

(11) **EP 4 628 531 A1**
(43) Date of publication of application: **08.10.2025**
(21) Application number: 23897610.4
(22) Date of filing: 21.11.2023
(51) Int. Cl.: C08L 23/10, B32B 27/32, B65D 65/40, C08L 23/04

(54) **RESIN COMPOSITION, MULTILAYER BODY AND PACKAGING MATERIAL**

(30) Priority: 28.11.2022 JP 2022189465
(71) Applicant: Prime Polymer Co., Ltd., Tokyo 104-0028 (JP)
(72) Inventor: FUJII, Sumiaki, Shanghai, 200070 (CN); SAITO, Tetsuya, Ichihara-shi, Chiba 299-0108 (JP); OGUNI, Michihiko, Ichihara-shi, Chiba 299-0108 (JP); YOSHIDOME, Ken, Ichihara-shi, Chiba 299-0108 (JP); SUZUKI, Masao, Tokyo 104-0028 (JP)
(74) Representative: J A Kemp LLP
(86) International application number: PCT/JP2023/041769
(87) International publication number: WO 2024/116962

(57) **Abstract**

[Problem] Provided is a resin composition capable of forming a laminated body being excellent in terms of extrusion lamination processability, heat resistance, and flexibility.

[Solution] A resin composition including the following four components in predetermined content proportions: a propylene-based polymer (A) that satisfies requirements (A-1) an MFR of 0.1 to 60 g/10 minutes, (A-2) a density of 886 to 930 kg/m³, and (A-3) a melting point of 130°C to 170°C; a propylene-based polymer (B) that satisfies requirements (B-1) an MFR of 0.1 to 60 g/10 minutes, (B-2) a density of 855 to 885 kg/m³, (B-3) a melting point of 130°C to 170°C, and (B-4) a Shore A hardness of 65 to 90; an ethylene-based polymer (C) that satisfies requirements (C-1) an MFR of 0.2 to 10 g/10 minutes, (C-2) a density of 855 to 913 kg/m³, and (C-3) a melting point of lower than 130°C; a low-density polyethylene (D) that satisfies requirements (D-1) an MFR of 0.1 to 50 g/10 minutes and (D-2) a density of 914 to 935 kg/m³.

## Description

### Technical Field

The present invention relates to a resin composition, a laminated body having a layer containing the resin composition, and a packaging material.

### Background Art

For films for sealant that are included as a raw material of packaging materials, in order to impart functions suitable for individual applications to the films due to the diversification of the applications thereof, vigorous studies are underway regarding olefin-based resin compositions that form the films. Among them, films for which a polypropylene is used are excellent in terms of flexibility and heat resistance. However, polypropylene films are poor in extrusion lamination processability, low-temperature sealability, and blocking resistance, and there is thus a demand for improvement thereof. Particularly, extrusion lamination, which is one of the lamination methods on substrates, is generally in wide use as a technique enabling a resin to be thinly laminated on a sheet-like substrate, and improvement in the extrusion lamination processability of polypropylene films is important in the field of films for sealant.

As polypropylene films that are used in the packaging material application, for example, resin compositions containing a polypropylene, an ethylene-based polymer, and a low-density polyethylene have been disclosed, and the effects of a variety of resin compositions, such as improvement in extrusion lamination processability (refer to Patent Literature 1), development of easy peelability (refer to Patent Literature 2), and imparting of low-temperature sealability (refer to Patent Literature 3), have been described.

### Citation List

### Patent Literature

Patent Literature 1: JPS52-24553A
Patent Literature 2: JP2017-066305A
Patent Literature 3: JPS56-40549A

### Summary of Invention

### Technical Problem

Generally, there is a case where a method of blending a low-density polyethylene with a polypropylene is used to impart extrusion lamination processability. Patent Literature 1 describes a resin composition having extrusion lamination processability improved by further adding an ethylene-based polymer; however, there has been a difficulty in maintaining heat resistance or flexibility, which is a characteristic of polypropylene resins. In addition, regarding the resin compositions described in Patent Literature 2 and 3 as well, there still remains a problem with heat resistance or flexibility.

With attention paid to the above-described problems of polypropylene films, an object of the present invention is to provide a resin composition capable of forming a laminated body and a packaging material that have excellent extrusion lamination processability and are also excellent balance of heat resistance and flexibility.

### Solution to Problem

The present invention relates to, for example, the following [1] to [3].
[1] A resin composition including:
   a propylene-based polymer (A) that satisfies the following requirements (A-1) to (A-3);
   a propylene-based polymer (B) that satisfies the following requirements (B-1) to (B-4);
   an ethylene-based polymer (C) that satisfies the following requirements (C-1) to (C-3); and
   a low-density polyethylene (D) that satisfies the following requirements (D-1) and (D-2),
   wherein a content of the polymer (A) is in a range of 30.0 mass% or more and 95.0 mass% or less,
   a content of the polymer (B) is in a range of 2.0 mass% or more and 50.0 mass% or less,
   a content of the polymer (C) is in a range of 1.0 mass% or more and 20.0 mass% or less, and
   a content of the low-density polyethylene (D) is in a range of 1.0 mass% or more and 20.0 mass% or less (provided that a sum of the contents of the polymer (A), the polymer (B), the polymer (C), and the low-density polyethylene (D) is 100 mass%):
      (A-1) a melt flow rate measured at a temperature of 230°C and a load of 2.16 kg in accordance with JIS K 7210 is 0.1 to 60 g/10 min;
      (A-2) a density measured in accordance with JIS K 7112 is 886 to 930 kg/m³;
      (A-3) a melting point (Tm) obtained by differential scanning calorimetry (DSC) is 130°C to 170°C;
      (B-1) a melt flow rate measured at a temperature of 230°C and a load of 2.16 kg in accordance with JIS K 7210 is 0.1 to 60 g/10 min;
      (B-2) a density measured in accordance with JIS K 7112 is 855 to 885 kg/m³;
      (B-3) a melting point (Tm) obtained by differential scanning calorimetry (DSC) is 130°C to 170°C;
      (B-4) a Shore A hardness measured in accordance with ASTM D2240 is 65 to 90;
      (C-1) a melt flow rate measured at a temperature of 230°C and a load of 2.16 kg in accordance with JIS K 7210 is 0.2 to 10 g/10 min;
      (C-2) a density measured in accordance with JIS K 7112 is 855 to 913 kg/m³;
      (C-3) a melting point (Tm) obtained by differential scanning calorimetry (DSC) is lower than 130°C;
      (D-1) a melt flow rate measured at a temperature of 190°C and a load of 2.16 kg in accordance with JIS K 7210 is 0.1 to 50 g/10 min; and
      (D-2) a density measured in accordance with JIS K 7112 is 914 to 935 kg/m³.
[2] A laminated body including a layer containing the resin composition according to [1].
[3] A packaging material including a layer containing the resin composition according to [1].

### Advantageous Effects of Invention

In the resin composition of the present invention, to a polypropylene resin (the propylene-based polymer (A)) and the low-density polyethylene (D) are added the ethylene-based polymer (C) and the propylene-based polymer (B) (different from the above-described polypropylene resin), whereby the compatibility between the polypropylene resin and the low-density polyethylene increases, and in a laminated body in which the resin composition is used, the extrusion lamination processability significantly improves. In addition, the laminated body in which the resin composition is used becomes a laminated body having excellent extrusion lamination processability and being excellent balance of flexibility and heat resistance without significantly impairing heat resistance, which is a characteristic derived from the propylene resin.

### Description of Embodiments

Hereafter, a resin composition and the like of the present invention will be described in detail. The present invention is not limited to the following embodiment and can be changed in a variety of manners within the scope of the gist and carried out. In the present invention, "to" includes values at both ends. For example, "0.1 to 60 g/10 min" includes both values of 0.1 g/10 min and 60 g/10 min and indicates a range of "0.1 g/10 min or more and 60 g/10 min or less."

### [Resin Composition]

The resin composition of the present invention contains a propylene-based polymer (A), a propylene-based polymer (B), an ethylene-based polymer (C), and a low-density polyethylene (D), the content of the polymer (A) is 30.0 mass% or more and 95.0 mass% or less, the content of the polymer (B) is 2.0 mass% or more and 50.0 mass% or less, the content of the polymer (C) is 1.0 mass% or more and 20.0 mass% or less, and the content of the low-density polyethylene (D) is 1.0 mass% or more and 20.0 mass% or less (provided that the sum of the contents of the polymer (A), the polymer (B), the polymer (C), and the low-density polyethylene (D) is 100 mass%).

In addition, the four components each satisfy the following requirements.
(A) Propylene-based polymer that satisfies the following requirements (A-1) to (A-3)
   (A-1) A melt flow rate measured at a temperature of 230°C and a load of 2.16 kg in accordance with JIS K 7210 is 0.1 to 60 g/10 min.
   (A-2) A density measured in accordance with JIS K 7112 is 886 to 930 kg/m³.
   (A-3) A melting point (Tm) obtained by differential scanning calorimetry (DSC) is 130°C to 170°C.
(B) Propylene-based polymer that satisfies the following requirements (B-1) to (B-4)
   (B-1) A melt flow rate measured at a temperature of 230°C and a load of 2.16 kg in accordance with JIS K 7210 is 0.1 to 60 g/10 min.
   (B-2) A density measured in accordance with JIS K 7112 is 855 to 885 kg/m³.
   (B-3) A melting point (Tm) obtained by differential scanning calorimetry (DSC) is 130°C to 170°C.
   (B-4) A Shore A hardness measured in accordance with ASTM D2240 is 65 to 90.
(C) Ethylene-based polymer that satisfies the following requirements (C-1) to (C-3)
   (C-1) A melt flow rate measured at a temperature of 230°C and a load of 2.16 kg in accordance with JIS K 7210 is 0.2 to 10 g/10 min.
   (C-2) A density measured in accordance with JIS K 7112 is 855 to 913 kg/m³.
   (C-3) A melting point (Tm) obtained by differential scanning calorimetry (DSC) is lower than 130°C.
(D) Low-density polyethylene that satisfies the following requirements (D-1) and (D-2)
   (D-1) A melt flow rate measured at a temperature of 190°C and a load of 2.16 kg in accordance with JIS K 7210 is 0.1 to 50 g/10 min.
   (D-2) A density measured in accordance with JIS K 7112 is 914 to 935 kg/m³.

### <Propylene-Based Polymer (A)>

The resin composition of the present invention contains the propylene-based polymer (A) that satisfies the requirements (A-1) to (A-3). Examples of the polymer (A) include propylene homopolymers, random copolymers of propylene and an α-olefin having two carbon atoms or 4 to 20 carbon atoms, and propylene block copolymers, and propylene homopolymers or random copolymers of propylene and an α-olefin having two carbon atoms or 4 to 20 carbon atoms are preferable. The polymer (A) that is used in the present invention may be one kind of (co)polymer or may be two or more kinds of (co)polymers.

In the resin composition of the present invention, particularly, propylene homopolymers are preferably used from the viewpoint of enabling heat resistance and stiffness to be imparted to sealant films, and on the other hand, particularly, random copolymers of propylene and an α-olefin having two carbon atoms or 4 to 20 carbon atoms are preferably used from the viewpoint of enabling flexibility and transparency to be imparted to sealant films.

Examples of the α-olefin having two carbon atoms or 4 to 20 carbon atoms that is copolymerized with propylene include ethylene, 1-butene, 1-pentene, 3-methyl-1-butene, 4-methyl-1-pentene, 1-hexene, 1-octene, 1-decene, 1-dodecene, 1-tetradecene, 1-hexadecene, 1-octadecene, and 1-eicosene.

Among them, ethylene, 1-butene, 1-hexene, and 1-octene are preferable, and ethylene and 1-butene are more preferable.

### (Requirement (A-1))

The melt flow rate (MFR) of the polymer (A) measured at a temperature of 230°C and a load of 2.16 kg in accordance with JIS K 7210 is 0.1 to 60 g/10 min, preferably 0.2 to 55 g/10 min, and more preferably 0.3 to 50 g/10 min. The use of the polymer (A) having an MFR within the above-described range makes it possible to improve the extrusion lamination processability of the resin composition.

### (Requirement (A-2))

The density of the polymer (A) measured in accordance with JIS K 7112 is 886 to 930 kg/m³, preferably 890 to 920 kg/m³, and more preferably 900 to 915 kg/m³. The use of the polymer (A) having a density within the above-described range makes it possible to impart heat resistance and flexibility to films for which the resin composition is used. All densities in the present invention are values that are calculated by rounding the measurement values to the nearest integers.

### (Requirement (A-3))

The melting point (Tm) of the polymer (A) measured by differential scanning calorimetry (DSC) is 130°C or higher and 170°C or lower, preferably 131°C or higher and 165°C or lower, and more preferably 132°C or higher and 160°C or lower. The use of the polymer (A) having a Tm within the above-described range makes it possible to impart heat resistance and flexibility to films for which the resin composition is used.

Regarding the melting point (Tm) of the polymer (A), the temperature of the peak apex of the crystal melting peak of approximately 5 mg of a specimen that has been heated up to 200°C, held for 10 minutes, then, cooled to -30°C at 10°C/min, held for five minutes, and then heated up to 200°C at 10°C/min in a nitrogen atmosphere (20 mL/min) using a differential scanning calorimeter using a differential scanning calorimeter is regarded as the melting point (Tm) of the polymer. In a case where a plurality of peaks is detected, the peak that is detected at the highest temperature is employed.

### (Method for Producing Polymer (A))

The polymer (A) can be produced by polymerizing a monomer by a well-known polymerization method such as a gas phase method, a bulk method, or a slurry method in the presence of a well-known catalyst such as a Ziegler-Natta-based catalyst or a metallocene-based catalyst.

The polymer (A) is not particularly limited as long as the polymer satisfies the requirements (A-1) to (A-3) and may be a commercially available product. Examples of the commercially available product include "PRIME POLYPRO (registered trademark)" series manufactured by Prime Polymer Co., Ltd.

### <Propylene-Based Polymer (B)>

The resin composition of the present invention contains the propylene-based polymer (B) that satisfies the requirements (B-1) to (B-4). Examples of the polymer (B) include the same polymers as the specific examples of the polymer (A), and propylene homopolymers or random copolymers of propylene and an α-olefin having two carbon atoms or 4 to 20 carbon atoms are preferable. The copolymer (B) that is used in the present invention may be one kind of copolymer or may be two or more kinds of copolymers.

In the resin composition of the present invention, particularly, propylene homopolymers are preferably used from the viewpoint of enabling heat resistance and stiffness to be imparted to sealant films, and on the other hand, particularly, random copolymers of propylene and an α-olefin having two carbon atoms or 4 to 20 carbon atoms are preferably used from the viewpoint of enabling flexibility and transparency to be imparted to sealant films.

Examples of the α-olefin having two carbon atoms or 4 to 20 carbon atoms that is copolymerized with propylene include the same α-olefins as the examples thereof for the polymer (A), and among them, ethylene, 1-butene, 1-hexene, and 1-octene are preferable, and ethylene and 1-butene are more preferable.

### (Requirement (B-1))

The melt flow rate (MFR) of the polymer (B) measured at a temperature of 230°C and a load of 2.16 kg in accordance with JIS K 7210 is 0.1 to 60 g/10 min, preferably 0.2 to 55 g/10 min, and more preferably 0.3 to 50 g/10 min. The use of the polymer (B) having an MFR within the above-described range makes it possible to improve the extrusion lamination processability of the resin composition.

### (Requirement (B-2))

The density of the polymer (B) measured in accordance with JIS K 7112 is 855 to 885 kg/m³, preferably 858 to 880 kg/m³, and more preferably 860 to 875 kg/m³. The use of the polymer (B) having a density within the above-described range makes it possible to impart heat resistance and flexibility to films for which the resin composition is used.

### (Requirement (B-3))

The melting point (Tm) of the polymer (B) measured by differential scanning calorimetry (DSC) is 130°C to 170°C, preferably 131°C to 165°C, and more preferably 132°C to 160°C. The use of the polymer (B) having a Tm within the above-described range makes it possible to impart heat resistance and flexibility to films for which the resin composition is used. The melting point (Tm) of the polymer (B) is measured by the same method as the measurement method described above for the polymer (A).

### (Requirement (B-4))

The Shore A hardness of the polymer (B) measured in accordance with ASTM D2240 is 65 to 90, preferably 67 to 89, and more preferably 70 to 88. The use of the polymer (B) having a Shore A hardness within the above-described range makes it possible to impart heat resistance and flexibility to films for which the resin composition is used. The Shore A hardness is a value that is obtained by storing a test specimen obtained by heating and melting a specimen at 190°C to 230°C and then pressing the specimen at a cooling temperature of 15°C to 25°C in an environment of 23 ± 2°C for 72 hours, bringing an indenter into contact with the test specimen, and then immediately reading the scale by using A type measuring instrument.

### (Method for Producing Polymer (B))

The polymer (B) can be produced by polymerizing a monomer by a well-known polymerization method such as a gas phase method, a bulk method, or a slurry method in the presence of a well-known catalyst such as a Ziegler-Natta-based catalyst or a metallocene-based catalyst.

The polymer (B) is not particularly limited as long as the polymer satisfies the requirements (B-1) to (B-4) and may be a commercially available product. Examples of the commercially available product include "TAFMER (registered trademark) PN" series manufactured by Mitsui Chemicals, Inc.

### <Ethylene-Based Polymer (C)>

The resin composition of the present invention contains the ethylene-based polymer (C) that satisfies the requirements (C-1) to (C-3). Examples of the polymer (C) include ethylene homopolymers, random copolymers of ethylene and an α-olefin having 3 to 20 carbon atoms, and ethylene block copolymers, and ethylene homopolymers or random copolymers of ethylene and an α-olefin having 3 to 20 carbon atoms are preferable. The copolymer (C) that is used in the present invention may be one kind of copolymer or may be two or more kinds of copolymers.

In the resin composition of the present invention, particularly, ethylene homopolymers are preferably used from the viewpoint of enabling heat resistance and stiffness to be imparted to sealant films, and on the other hand, particularly, random copolymers of ethylene and an α-olefin having 3 to 20 carbon atoms are preferably used from the viewpoint of enabling flexibility and transparency to be imparted to sealant films.

Examples of the α-olefin having 3 to 20 carbon atoms that is copolymerized with ethylene include propylene, 1-butene, 1-pentene, 3-methyl-1-butene, 4-methyl-1-pentene, 1-hexene, 1-octene, 1-decene, 1-dodecene, 1-tetradecene, 1-hexadecene, 1-octadecene, and 1-eicosene.

Among them, α-olefins having 3 to 10 carbon atoms are preferable, and α-olefins having 3 to 8 carbon atoms such as propylene, 1-butene, 1-pentene, 3-methyl-1-butene, 4-methyl-1-pentene, 1-hexene, and 1-octene are more preferable.

### (Requirement (C-1))

The melt flow rate (MFR) of the polymer (C) measured at a temperature of 230°C and a load of 2.16 kg in accordance with JIS K 7210 is 0.2 to 10 g/10 min, preferably 0.3 to 9 g/10 min, and more preferably 0.4 to 8.5 g/10 min. The use of the polymer (B) having an MFR within the above-described range makes it possible to improve the extrusion lamination processability of the resin composition.

### (Requirement (C-2))

The density of the polymer (C) measured in accordance with JIS K 7112 is 855 to 913 kg/m³, preferably 856 to 910 kg/m³, and more preferably 857 to 905 kg/m³. The use of the polymer (C) having a density within the above-described range makes it possible to improve the extrusion lamination processability of the resin composition.

### (Requirement (C-3))

The melting point (Tm) of the polymer (C) measured by differential scanning calorimetry (DSC) is lower than 130°C, preferably lower than 120°C, and more preferably lower than 110°C. The use of the polymer (C) having a Tm within the above-described range makes it possible to impart flexibility to films for which the resin composition is used. The melting point (Tm) of the polymer (C) can be measured by the same method as the measurement method described above for the polymer (A).

### (Method for Producing Polymer (C))

The polymer (C) can be produced by polymerizing a monomer by a well-known polymerization method such as a gas phase method, a bulk method, or a slurry method in the presence of a well-known catalyst such as a Ziegler-Natta-based catalyst or a metallocene-based catalyst.

The polymer (C) is not particularly limited as long as the polymer satisfies the requirements (C-1) to (C-3) and may be a commercially available product. Examples of the commercially available product include "TAFMER P" series, "TAFMER (registered trademark) A" series manufactured by Mitsui Chemicals, Inc. "EVOLUE (registered trademark)" series manufactured by Prime Polymer Co., Ltd. and "SABIC (registered trademark) COHERE S" series manufactured by Saudi Basic Industries Corporation.

The copolymer (C) can be produced by polymerizing a monomer by a well-known polymerization method such as a gas phase method, a bulk method, or a slurry method in the presence of a well-known catalyst such as a Ziegler-Natta-based catalyst or a metallocene-based catalyst. One example of a method for setting the melting point to, for example, lower than 120°C is a method in which a polymerization condition such as the amount of the monomer fed is controlled, and a copolymer having a target melting point can be obtained by this method.

### <Low-Density Polyethylene (D)>

The resin composition of the present invention contains the low-density polyethylene (D) that satisfies the requirements (D-1) and (D-2). Examples of the low-density polyethylene (D) include ethylene homopolymers, random copolymers of ethylene and an α-olefin having 3 to 20 carbon atoms, and ethylene block copolymers, and ethylene homopolymers or random copolymers of ethylene and an α-olefin having 3 to 20 carbon atoms are preferable. The low-density polyethylene (D) that is used in the present invention may be one kind of copolymer or may be two or more kinds of copolymers.

In the resin composition of the present invention, particularly, ethylene homopolymers are preferably used from the viewpoint of enabling heat resistance and stiffness to be imparted to sealant films, and on the other hand, particularly, random copolymers of ethylene and an α-olefin having 3 to 20 carbon atoms are preferably used from the viewpoint of enabling flexibility and transparency to be imparted to sealant films.

Examples of the α-olefin having 3 to 20 carbon atoms that is copolymerized with ethylene include propylene, 1-butene, 1-pentene, 3-methyl-1-butene, 4-methyl-1-pentene, 1-hexene, 1-octene, 1-decene, 1-dodecene, 1-tetradecene, 1-hexadecene, 1-octadecene, and 1-eicosene.

Among them, ethylene, 1-butene, 1-hexene, and 1-octene are preferable, and ethylene, 1-butene, and 1-hexene are more preferable.

### (Requirement (D-1))

The melt flow rate (MFR) of the low-density polyethylene (D) measured at a temperature of 190°C and a load of 2.16 kg in accordance with JIS K 7210 is 0.1 to 50 g/10 min, preferably 0.2 to 45 g/10 min, and more preferably 0.3 to 40 g/10 min. The use of the low-density polyethylene (D) having an MFR within the above-described range makes it possible to improve the extrusion lamination processability of the resin composition.

### (Requirement (D-2))

The density of the low-density polyethylene (D) measured in accordance with JIS K 7112 is 914 to 935 kg/m³, preferably 915 to 933 kg/m³, and more preferably 916 to 930 kg/m³. The use of the low-density polyethylene (D) having a density within the above-described range makes it possible to improve the extrusion lamination processability of the resin composition.

### (Method for Producing Low-Density Polyethylene (D))

Generally, polyethylene having a density within the above-described range is referred to as low-density polyethylene, and in the present invention, for example, a high-pressure method low-density polyethylene can be used. The high-pressure method refers to a method in which ethylene is polymerized under conditions of 1,000 to 4,000 atm and approximately 100 to 350°C using oxygen or a radical initiator as a catalyst.

The polymer (D) is not particularly limited as long as the polymer satisfies the requirements (D-1) and (D-2) and may be a commercially available product. Examples of the commercially available product include "MIRASON (registered trademark)" series manufactured by Dow-Mitsui Polychemicals Co., Ltd.

The polymers (A) to (C) and the low-density polyethylene (D) that are used in the present invention may contain a biomass-derived α-olefin as the α-olefins that form these polymers. That is, the α-olefin that forms the polymer may be a biomass-derived α-olefin alone or may contain both a biomass-derived α-olefin and a fossil fuel-derived α-olefin. The biomass-derived α-olefin refers to an α-olefin composed of any renewable natural raw material derived from a plant or an animal, including fungi, yeasts, algae, and bacteria, and a residue thereof as raw materials, contains a 14C isotope as carbon in a proportion of approximately 10⁻¹², and has a biomass carbon concentration (unit: pMC) measured in accordance with ASTM D 6866 of approximately 100 pMC. The biomass-derived α-olefin can be obtained by a conventionally known method.

The α-olefins that form the polymers (A) to (C) and the low-density polyethylene (D) that are used in the present invention preferably contain a biomass-derived α-olefin from the viewpoint of environmental impact reduction (mainly greenhouse gas reduction). If the polymer production conditions, such as the polymerization catalyst, the polymerization process, and the polymerization temperature, are the same, even if the α-olefin as the raw material contains a biomass-derived α-olefin, the molecular structure is the same as propylene-based polymers composed of a fossil fuel-derived α-olefin, except for the fact that it contains 14C isotopes in a ratio of about 10⁻¹² to 10⁻¹⁴. Therefore, the performance is also considered to be unchanged.

The polymers (A) to (C) and the low-density polyethylene (D) that are used in the present invention may contain a chemical recycled α-olefin as the α-olefins that form the polymers. That is, the α-olefin that forms the polymer may be a chemical recycled α-olefin alone or may contain both a chemical recycled α-olefin and a fossil fuel-derived α-olefin and/or a biomass-derived α-olefin. The chemical recycled α-olefin can be obtained by a conventionally known method.

The propylene-based polymers according to the present invention preferably contain a chemical recycled α-olefin from the viewpoint of environmental impact reduction (mainly waste reduction). Even when a raw material monomer contains a chemical recycled monomer, the chemical recycled monomer is a monomer obtained by returning a polymer, such as waste plastic, to a monomer unit, such as propylene, by depolymerization or pyrolysis and a monomer produced using such a monomer as a raw material, and the molecular structure is thus the same as those of polymers composed of a fossil fuel-derived monomer as long as the polymer production conditions, such as the polymerization catalyst, the polymerization process, and the polymerization temperature, are the same. Therefore, the performance is also considered to be unchanged.

### <Resin Composition>

The resin composition of the present invention contains the polymer (A), the polymer (B), the polymer (C), and the low-density polyethylene (D). Hereinafter, the content of each component will be described, provided that the sum of the contents of the four components is 100 mass%.

The content of the polymer (A) is 30.0 mass% or more and 95.0 mass% or less, preferably 40.0 mass% or more and 93.0 mass% or less, and more preferably 45.0 mass% or more and 90.0 mass% or less. When the content of the polymer (A) is within the above-described range, the processability and heat resistance of films are excellent.

The content of the polymer (B) is 2.0 mass% or more and 50.0 mass% or less, preferably 3.0 mass% or more and 40.0 mass% or less, and more preferably 4.0 mass% or more and 30.0 mass% or less. When the content of the polymer (B) is within the above-described range, the flexibility and heat resistance of films are excellent.

The content of the polymer (C) is 1.0 mass% or more and 20.0 mass% or less, preferably 1.0 mass% or more and 15.0 mass% or less, and more preferably 1.0 mass% or more and 10.0 mass% or less. When the content of the polymer (C) is within the above-described range, the extrusion lamination processability of the resin composition and the heat resistance of films are excellent.

The content of the low-density polyethylene (D) is 1.0 mass% or more and 20.0 mass% or less, preferably 2.0 mass% or more and 15.0 mass% or less, and more preferably 3.0 mass% or more and 10.0 mass% or less. When the content of the low-density polyethylene (D) is within the above-described range, the extrusion lamination processability of the resin composition and the heat resistance of films are excellent.

The melt flow rate (MFR) of the resin composition measured at a temperature of 230°C and a load of 2.16 kg in accordance with JIS K 7210 is preferably 1.0 to 20 g/10 min and more preferably 3.0 to 15 g/10 min. The MFR of the resin composition being within the above-described range means that the extrusion lamination processability of the resin composition is sufficient. When the four components that satisfy the individual requirements are contained within the above-described ranges, it is possible to increase the compatibility of each component and significantly improve the extrusion lamination processability.

The resin composition of the present invention may be produced by an arbitrary method, but is preferably produced by melt-kneading the individual components described above. Specific examples thereof include methods in which the four components were charged into and kneaded in a tumbler-type mixer, a V-type mixer, a ribbon-type mixer, or a Henschel mixer and then melt-kneaded with a single screw extruder, a multi-screw extruder, a kneader, or a Banbury mixer.

The resin composition of the present invention is useful as a sealant film, and the film can be produced by extruding the resin composition of the present invention. In the present invention, a film refers to a sheet-like formed product having a thickness of 800 µm or less. The thickness of the film is preferably 1 to 300 µm and more preferably 3 to 200 µm.

The sealant film may contain a resin other than the polymers (A) to (C) and the low-density polyethylene (D) and an additive such as a tackifier, a weathering stabilizer, a heat stabilizer, an antistatic agent, an anti-slip agent, an anti-blocking agent, a lubricant, a pigment, a dye, a plasticizer, an anti-aging agent, a hydrochloric acid absorber, an antioxidant, or a nucleating agent as necessary to an extent that the object of the present invention is not impaired.

### [Laminated Body]

A laminated body of the present invention has a layer containing the above-described resin composition. That is, the laminated body of the present invention includes the sealant film as a sealant layer. The laminated body refers to a structure in which a plurality of layers is laminated together. The laminated body of the present invention has a structure in which the sealant layer and a substrate layer are laminated together.

### <Substrate Layer>

A resin composition that forms the substrate layer is preferably a polypropylene. Examples of the polypropylene include propylene homopolymers and copolymers containing propylene as a main monomer. In the case of the copolymer, the copolymer may be a random copolymer or may be a block copolymer. Examples of a monomer that is copolymerized with propylene include α-olefins having two carbon atoms or 4 to 20 carbon atoms and diene compounds. In the polypropylene, the content of a propylene-derived structural unit is 85 to 100 mol% and preferably 90 to 99.5 mol%, and the content of a structural unit derived from a different monomer is 0 to 15 mol% and preferably 0.5 to 10 mol% (provided that the total of the propylene-derived constitutional unit and the structural unit derived from a different monomer is 100 mol%) .

As the α-olefin having two carbon atoms or 4 to 20 carbon atoms that is copolymerized with propylene, ethylene, 1-butene, 1-pentene, 3-methyl-1-butene, 4-methyl-1-pentene, 1-hexene, 1-octene, 1-decene, 1-dodecene, and 1-tetradecene can be exemplified.

The polypropylene that forms the substrate layer can be produced by polymerizing a monomer by a well-known polymerization method such as a gas phase method, a bulk method, or a slurry method in the presence of a well-known catalyst such as a Ziegler-Natta-based catalyst or a metallocene-based catalyst. The polypropylene that is contained in the substrate layer may be the same as or different from the polymer (A) or (B) that is contained in the resin composition that forms the above-described sealant layer.

The substrate layer may be composed of one layer or may be composed of a plurality of layers.

The substrate layer may contain a resin other than the polypropylene and an additive such as a tackifier, a weathering stabilizer, a heat stabilizer, an antistatic agent, an anti-slip agent, an anti-blocking agent, a lubricant, a pigment, a dye, a plasticizer, an anti-aging agent, a hydrochloric acid absorber, an antioxidant, or a nucleating agent as necessary to an extent that the object of the present invention is not impaired.

In a case where the sealant film is used as the sealant layer in the laminated body of the present invention, the thickness thereof is normally 3 to 30 µm and preferably 5 to 25 µm, and the thickness of the substrate layer is normally 10 to 100 µm and preferably 20 to 50 µm. In a case where there are a plurality of the sealant layers, the thickness of each sealant layer is preferably within the above-described range. In addition, the thickness of the entire laminated body of the present invention is normally 20 to 100 µm and preferably 25 to 70 µm.

The laminated body of the present invention may be produced by laminating the sealant layer and the substrate layer by dry lamination, non-solvent lamination, or sand lamination or may be produced by laminating the sealant layer and the substrate layer by melt extrusion lamination. The resin composition of the present invention has excellent extrusion lamination processability, and a lamination method by melt extrusion lamination is suitable for the laminated body of the present invention.

### <Packaging Material>

A layer containing the resin composition of the present invention can be suitably used in packaging materials. A packaging material of the present invention having a layer containing the resin composition of the present invention is excellent in terms of processability, heat resistance, and flexibility.

The packaging material can be formed of, for example, a laminated body having a layer containing the resin composition of the present invention. Specifically, the packaging material can be produced by making the sealant layers of the laminated bodies face each other or making the sealant layer of the laminated body and a different film face each other and then heat-sealing at least a part of the circumference from the outer surface side so as to form a desired container shape. In addition, a sealed packaging material can be produced by heat-sealing the entire circumference. This packaging material can be used in an automatic packaging device of a solid matter such as snacks or bread, a powder or a liquid material.

In addition, a content is loaded into a container obtained by forming the laminated body or a sheet into a cup shape by vacuum forming or air pressure forming in advance, a container obtained by injection, or a container formed of a paper substrate, then, the container is coated with the laminated body of the present invention as a lid, and the upper part or side parts of the container are heat-sealed, whereby the container packaging the content can be obtained. This container is suitably used for the packaging of instant noodles, miso, jelly, pudding, and snacks.

### Examples

Next, a laminated body of the present invention will be described in more detail by showing Examples, but the present invention is not limited thereto.

Materials used in the Examples and Comparative Examples will be shown below.
): 6 g/10 min, density (in accordance with JIS K 7112): 868 g/m³, melting point: 160°C, Shore A hardness (in accordance with ASTM D2240): 84)
(b-2) Propylene-based elastomer: TAFMER (registered trademark) PN-2070 (manufactured by Mitsui Chemicals, Inc., MFR (230°C, 2.16 kg load, in accordance with JIS K 7210): 7 g/10 min, density (in accordance with JIS K 7112): 868 g/m³, melting point: 140°C, Shore A hardness (in accordance with ASTM D2240): 75)

(A) Propylene-Based Polymer
   (a-1) Polypropylene resin: PRIME POLYPRO (registered trademark) F113A (manufactured by Prime Polymer Co., Ltd., MFR (230°C, 2.16 kg load, in accordance with JIS K 7210): 3 g/10 min, density (in accordance with JIS K 7112): 910 kg/m³, melting point: 159)
   (a-2) Polypropylene resin: PRIME POLYPRO (registered trademark) F327 (manufactured by Prime Polymer Co., Ltd., MFR (230°C, 2.16 kg load, in accordance with JIS K 7210): 7 g/10 min, density (in accordance with JIS K 7112): 910 kg/m³, melting point: 137)
   (a-3) Polypropylene resin: PRIME POLYPRO (registered trademark) F-744NP (manufactured by Prime Polymer Co., Ltd., MFR (230°C, 2.16 kg load, in accordance with JIS K 7210): 7 g/10 min, density (in accordance with JIS K 7112): 910 kg/m³, melting point: 134)
(B) Propylene-Based Polymer
   (b-1) Propylene-based elastomer: TAFMER (registered trademark) PN-2060 (manufactured by Mitsui Chemicals, Inc., MFR (230°C, 2.16 kg load, in accordance with JIS K 7210): 6 g/10 min, density (in accordance with JIS K 7112): 868 kg/m³, melting point: 160, Shore A hardness (in accordance with ASTM D2240): 84)
   (b-2) Propylene-based elastomer: TAFMER (registered trademark) PN-2070 (manufactured by Mitsui Chemicals, Inc., MFR (230°C, 2.16 kg load, in accordance with JIS K 7210): 7 g/10 min, density (in accordance with JIS K 7112): 868 kg/m³, melting point: 140, Shore A hardness (in accordance with ASTM D2240): 75)
(C) Ethylene-Based Polymer
   (c-1) Ethylene/propylene random copolymer: TAFMER (registered trademark) P-0375 (manufactured by Mitsui Chemicals, Inc., MFR (230°C, 2.16 kg load, in accordance with JIS K 7210): 3 g/10 min, density (in accordance with JIS K 7112): 859 kg/m³), melting point (Tm): 29°C)
   (c-2) Ethylene/propylene random copolymer: TAFMER (registered trademark) P-0775 (manufactured by Mitsui Chemicals, Inc., MFR (230°C, 2.16 kg load, in accordance with JIS K 7210): 0.6 g/10 min, density (in accordance with JIS K 7112): 858 kg/m³), melting point: 43°C)
   (c-3) Ethylene/propylene random copolymer: TAFMER (registered trademark) P-0480 (manufactured by Mitsui Chemicals, Inc., MFR (230°C, 2.16 kg load, in accordance with JIS K 7210): 1.8 g/10 min, density (in accordance with JIS K 7112): 869 kg/m³, melting point (Tm): 43°C)
   (c-4) Ethylene/propylene random copolymer: TAFMER (registered trademark) P-0680 (manufactured by Mitsui Chemicals, Inc., MFR (230°C, 2.16 kg load, in accordance with JIS K 7210): 0.8 g/10 min, density (in accordance with JIS K 7112): 869 kg/m³, melting point (Tm): 44°C)
   (c-5) Ethylene/butene copolymer: TAFMER (registered trademark) A-0550S (manufactured by Mitsui Chemicals, Inc., MFR (230°C, 2.16 kg load, in accordance with JIS K 7210): 0.9 g/10 min, density (in accordance with JIS K 7112): 861 kg/m³, melting point (Tm): lower than 50°C)
   (c-6) Ethylene-based polymer: TAFMER (registered trademark) A-0585X (manufactured by Mitsui Chemicals, Inc., MFR (230°C, 2.16 kg load, in accordance with JIS K 7210): 0.9 g/10 min, density (in accordance with JIS K 7112): 885 kg/m³, melting point (Tm): 68°C)
   (c-7) Ethylene/butene copolymer: TAFMER (registered trademark) A-0250S (manufactured by Mitsui Chemicals, Inc., MFR (230°C, 2.16 kg load, in accordance with JIS K 7210): 0.5 g/10 min, density (in accordance with JIS K 7112): 861 kg/m³, melting point (Tm): lower than 50°C)
   (c-8) Linear low-density polyethylene: EVOLUE (registered trademark) SP0510 (manufactured by Mitsui Chemicals, Inc., MFR (230°C, 2.16 kg load, in accordance with JIS K 7210): 2.3 g/10 min, density (in accordance with JIS K 7112): 904 kg/m³, melting point (Tm): 98°C)
   (c-9) Linear low-density polyethylene: SABIC (registered trademark) COHERE S100 (manufactured by Saudi Basic Industries Corporation, MFR (230°C, 2.16 kg load, in accordance with JIS K 7210): 1.8 g/10 min, density (in accordance with JIS K 7112): 900 kg/m³, melting point (Tm): 107°C)
   (c'-1) Ethylene/butene copolymer: TAFMER (registered trademark) A-6050 (manufactured by Mitsui Chemicals, Inc., MFR (230°C, 2.16 kg load, in accordance with JIS K 7210): 12 g/10 min, density (in accordance with JIS K 7112): 864 kg/m³, melting point (Tm): 68°C)
(D) Low-Density Polyethylene
   (d-1) MIRASON (registered trademark) 11P (manufactured by Dow-Mitsui Polychemicals Co., Ltd., MFR (190°C, 2.16 kg load, in accordance with JIS K 7210): 7.2 g/10 min, density (in accordance with JIS K 7112): 917 kg/m³)
   (d-2) MIRASON (registered trademark) 16P (manufactured by Dow-Mitsui Polychemicals Co., Ltd., MFR (190°C, 2.16 kg load, in accordance with JIS K 7210): 3.7 g/10 min, density (in accordance with JIS K 7112): 923 kg/m³)

The melting points (Tm) of the polymers, the processability, heat resistance, and flexibility of films were measured by the following measurement methods.

### [Melting Point (Tm)]

Temperatures at which the peak apex of the crystal melting peak of approximately 5 mg of a specimen (polymer) that had been heated up to 200°C, held for 10 minutes, then, cooled to -30°C at 10°C/min, held for five minutes, and then heated up to 200°C at 10°C/min in a nitrogen atmosphere (20 mL/min) using a differential scanning calorimeter (DSCPyris1 manufactured by PerkinElmer Inc.) was shown were regarded as the melting points (Tm) of the polymers (A) to (C).

### [Processability]

A film was produced under conditions of a cooling roll surface temperature of 60°C, a die width of 680 mm, the opening degree of a die lip of 0.8 mm, and an air gap of 80 mm using a casting device set such that the temperature of a resin composition that was extruded from a T die of an extruder having an diameter of 75 mmφ reached 270°C. The screw rotation speed was gradually increased, and a processing rate when any of both ends of the molten film was shaken approximately 5 mm was regarded as the haul-off speed. At the time of increasing the processing rate, the amount of the resin composition extruded was adjusted by gradually increasing the screw rotation speed so that the film thickness was 20 µm at all times.

The processability during the extrusion lamination process was evaluated according to the following standards.
o: The maximum haul-off speed is above 40 m/min.
x: The maximum haul-off speed is 40 m/min or less.

### [Heat Resistance]

Two 20 µm-thick films produced by the film formation method described in the [processability] section were sealed for one second using a heat sealer at a sealing pressure of 0.2 MPa and each of the sealing temperatures of 110°C, 115°C, 120°C, 125°C, 130°C, 135°C, 140°C, 150°C, 160°C, or 170°C, thereby producing a test piece. For each test piece, the peel strength at the time of peeling the heat seal portion at a rate of 300 mm/min in a 180° direction with respect to the film surface using a tensile tester (RTG-1310, manufactured by A&D Company, Limited.) was measured and regarded as the heat seal strength at each temperature.

In a case where the heat seal strength exceeded 1.5 N/m, blocking was considered to occur due to heat, the highest temperature at which the heat seal strength was 1.5 N/m or less was defined as the heat resistant temperature, and the heat resistance of the film was evaluated according to the following standards.
o: The heat resistant temperature is 120°C or higher.
x: The heat resistant temperature is lower than 120°C.

### [Flexibility]

A strip test piece was produced in accordance with JIS K 7161 using a 20 µm-thick film produced by the film formation method described in the [processability] section, a tensile test was performed using the tensile tester (RTG-1310, manufactured by A&D Company, Limited.) at a rate of 300 mm/min at 180° with respect to the film surface in the machine direction (MD) or transverse direction (TD) of the resin, and the elastic modulus of the film in each direction was measured.

The flexibility of the film was evaluated according to the following standards.
o: The elastic moduli in the respective directions are both less than 1200 MPa.
x: The elastic moduli in the respective directions are both 1200 MPa or more.

### [Example 1]

A variety of raw materials used were mixed together in blending amounts shown in Table 1-1 using a mixer (Henschel mixer FM-150, manufactured by Mitsui Miike Machinery Company, Limited) and then melt-kneaded at 200°C in a discharge amount of 50 kg/h using a 65 mm single screw extruder (manufactured by Tomi Machinery Co., Ltd.), a molten resin extruded from a stand die was received while being cooled and solidified in a water tank and cut using a strand cutter, thereby preparing a pellet-like resin composition having a diameter of approximately 3 mm.

A film was produced by the film formation method described in the [processability] section using the resin composition, and the processability, the heat resistance, and the flexibility were obtained by the above-described measurement methods. The results are shown in Table 1-1.

### [Examples 2 to 13 and Comparative Examples 1 to 4]

Pellet-like resin compositions were produced in the same manner as in Example 1 except that a variety of raw materials used for the resin compositions were changed to the blending amounts shown in Table 1-1 or Table 1-2. The processability, the heat resistance, and the flexibility were obtained by the above-described measurement methods using each of these resin compositions. The results are shown in Table 1-1 or Table 1-2.

### [Example 14]

A variety of raw materials used were mixed together in blending amounts shown in Table 1-2 using the mixer (Henschel mixer FM-150, manufactured by Mitsui Miike Machinery Company, Limited) and then melt-kneaded at 200°C in a discharge amount of 50 kg/h using a twin screw extruder (manufactured by Ikegai Co., Ltd.), a molten resin extruded from a stand die was received while being cooled and solidified in a water tank and cut using a strand cutter, thereby preparing a pellet-like resin composition having a diameter of approximately 3 mm.

A film was produced by the film formation method described in the [processability] section using the resin composition, and the processability, the heat resistance, and the flexibility were obtained by the above-described measurement methods. The results are shown in Table 1-2.

### [Example 15 and Comparative Example 5]

Laminated bodies were produced in the same manner as in Example 14 except that a variety of raw materials used for the resin compositions were changed to the blending amounts shown in Table 1-2. The processability, the heat resistance, and the flexibility were obtained by the above-described measurement methods using each of these laminated bodies. The results are shown in Table 1-2.

### [Table 1-1]

**Table 1-1**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Extruder | | Single screw | Single screw | Single screw | Single screw | Single screw | Single screw | Single screw | Single screw | Single screw | Single screw |
| Propylene-based polymer (A) [mass%] | (a-3) | 45 | 45 | 45 | 45 | 45 | 45 | 45 | 45 | | |
| | (a-1) | 40 | 40 | 40 | 40 | 40 | 40 | 40 | 40 | 25 | 25 |
| | (a-2) | | | | | | | | | 28 | 28 |
| Propylene-based polymer (B) [mass%] | (b-1) | 8 | 8 | 8 | | 8 | 8 | 8 | 8 | 30 | 30 |
| | (b-2) | | | | 8 | | | | | | |
| Ethylene-based polymer (C) [mass%] | (c-4) | | 1 | 2 | 2 | 2 | | | | | |
| | (c-2) | | 1 | | | | | | | 10 | |
| | (c-7) | 2 | | | | | | | | | |
| | (c-1) | | | | | | 2 | | | | |
| | (c-5) | | | | | | | 2 | | | |
| | (c-6) | | | | | | | | 2 | | |
| | (c-3) | | | | | | | | | | 10 |
| | (c-8) | | | | | | | | | | |
| | (c-9) | | | | | | | | | | |
| | (c'-1) | | | | | | | | | | |
| Low-density polyethylen (D) [mass%] | (d-2) | 5 | 5 | | | 5 | 5 | 5 | 5 | | |
| | (d-1) | | | 5 | 5 | | | | | 7 | 7 |
| Maximum haul-off speed [m/min] | | 75 | 70 | 60 | 60 | 80 | 45 | 60 | 75 | 145 | 85 |
| Heat seal strength [N/m] | 110°C | | | | | | | | | | |
| | 115°C | | | | | | | | | | |
| | 120°C | | | | | | | | | 0 | 0 |
| | 125°C | | | | | | | | | 0.57 | 0.88 |
| | 130°C | 0 | 0 | 0 | 0 | 0 | 0 | 0 | 0 | 1.2 | 1.6 |
| | 135°C | | | | | | | | | 3.5 | 4.0 |
| | 140°C | 0.57 | 0.88 | 0.72 | 0.99 | 0.87 | 1.04 | 0.8 | 0.77 | 4.6 | 5.1 |
| | 145°C | 2.0 | 3.4 | 3.1 | 3.6 | 3.2 | 3.4 | 3.2 | 3.3 | 5.6 | 5.3 |
| | 150°C | 6.3 | 6.2 | 6.1 | 6.3 | 6.1 | 5.9 | 6.9 | 6.0 | 5.8 | 6.0 |
| | 160°C | 7.9 | 7.5 | 8.0 | 7.6 | 6.9 | 7.7 | 7.6 | 7.6 | 5.7 | 5.9 |
| | 170°C | 7.5 | 7.3 | 7.8 | 7.0 | 7.3 | 7.8 | 8.3 | 7.5 | 5.6 | 6.2 |
| Heat resistant temperature [°C] | | 140 | 140 | 140 | 140 | 140 | 140 | 140 | 140 | 130 | 125 |
| Tensile elastic modulus [MPa] | MD | 1060 | 1060 | 980 | 1040 | 1040 | 1050 | 1050 | 1050 | 410 | 440 |
| | TD | 1090 | 1030 | 1040 | 990 | 1050 | 1060 | 1040 | 1060 | 410 | 410 |
| Physical properties of resins (MFR(230°C)) [g/10min] | | 4.7 | 4.8 | 4.9 | 5.0 | 4.8 | 4.9 | 4.9 | 5 | 4.5 | 4.9 |
| Evaluation | Processability | ○ | ○ | ○ | ○ | ○ | ○ | ○ | ○ | ○ | ○ |
| | Heat resistance | ○ | ○ | ○ | ○ | ○ | ○ | ○ | ○ | ○ | ○ |
| | Flexibility | ○ | ○ | ○ | ○ | ○ | ○ | ○ | ○ | ○ | ○ |

### [Table 1-2]

**Table 1-2**

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Extruder | | Single screw | Single screw | Single screw | Twin screw | Twin screw | Single screw | Single screw | Single screw | Single screw | Twin screw |
| Propylene-based polymer (A) [mass%] | (a-3) | | | | 85 | 85 | 45 | | 45 | | 85 |
| | (a-1) | 25 | 25 | 25 | | | 40 | 100 | 40 | 30 | |
| | (a-2) | 28 | 28 | 28 | | | | | | 33 | |
| Propylene-based polymer (B) [mass%] | (b-1) | 30 | 30 | 30 | 9 | 5 | 10 | | 8 | 30 | |
| | (b-2) | | | | | | | | | | |
| Ethylene-based polymer (C) [mass%] | (c-4) | | | | 1 | 5 | | | | | 10 |
| | (c-2) | | | | | | | | | | |
| | (c-7) | 10 | | | | | | | | | |
| | (c-1) | | | | | | | | | | |
| | (c-5) | | | | | | | | | | |
| | (c-6) | | | | | | | | | | |
| | (c-3) | | | | | | | | | | |
| | (c-8) | | 10 | | | | | | | | |
| | (c-9) | | | 10 | | | | | | | |
| | (c'-1) | | | | | | | | 2 | | |
| Low-density polyethylen (D) [mass%] | (d-2) | | | | 5 | 5 | 5 | | 5 | | 5 |
| | (d-1) | 7 | 7 | 7 | | | | | | 7 | |
| Maximum haul-off speed [m/min] | | 130 | 70 | 110 | 210 | 230 | 40 | Less than 40 | Less than 40 | 40 | 230 |
| Heat seal strength [N/m] | 110°C | | | | 0 | 0 | | | | | 0 |
| | 115°C | | | | 0.34 | 0.56 | | | | | 0.65 |
| | 120°C | 0 | 0 | 0 | 0.91 | 1.5 | | | | 0 | 1.9 |
| | 125°C | 0.52 | 0.51 | 0.58 | 5.2 | 4.9 | | | | 0 | 4.8 |
| | 130°C | 1.1 | 1.2 | 1.4 | 5.8 | 5.4 | 0 | | 0 | 0.34 | 5.4 |
| | 135°C | 3.5 | 3.8 | 3.8 | | | | | | 1.4 | |
| | 140°C | 4.6 | 4.7 | 5.0 | 6.0 | 6.1 | 0.74 | | 0.91 | 3.7 | 6.0 |
| | 145°C | 5.8 | 5.8 | 6.0 | 5.7 | 6.0 | 2.8 | | 4.3 | 6.1 | 5.7 |
| | 150°C | 6.0 | 6.3 | 6.5 | | | 6.2 | | 6.6 | 5.7 | |
| | 160°C | 5.9 | 6.5 | 6.0 | | | 7.2 | | 8.0 | 6.4 | |
| | 170°C | 6.2 | 6.5 | 6.2 | | | 7.2 | | 8.4 | 6.6 | |
| Heat resistant temperature [°C] | | 130 | 130 | 130 | 120 | 120 | 140 | - | 140 | 135 | 115 |
| Tensile elastic modulus [MPa] | MD | 430 | 470 | 460 | 570 | 550 | 1060 | 1600 | 1050 | 590 | 620 |
| | TD | 430 | 470 | 460 | 580 | 600 | 1090 | 1600 | 1060 | 600 | 610 |
| Physical properties of resins (MFR(230°C)) [g/10min] | | 4.4 | 4.9 | 5.0 | 10.7 | 7.7 | 5.1 | 3.0 | 5.4 | 5.6 | 6.9 |
| Evaluation | Processability | ○ | ○ | ○ | ○ | ○ | X | X | X | X | ○ |
| | Heat resistance | ○ | ○ | ○ | ○ | ○ | ○ | - | ○ | ○ | X |
| | Flexibility | ○ | ○ | ○ | ○ | ○ | ○ | X | ○ | ○ | ○ |

## Claims

1. A resin composition comprising:
a propylene-based polymer (A) that satisfies the following requirements (A-1) to (A-3);
a propylene-based polymer (B) that satisfies the following requirements (B-1) to (B-4);
an ethylene-based polymer (C) that satisfies the following requirements (C-1) to (C-3); and
a low-density polyethylene (D) that satisfies the following requirements (D-1) and (D-2),
wherein a content of the polymer (A) is in a range of 30.0 mass% or more and 95.0 mass% or less,
a content of the polymer (B) is in a range of 2.0 mass% or more and 50.0 mass% or less,
a content of the polymer (C) is in a range of 1.0 mass% or more and 20.0 mass% or less, and
a content of the low-density polyethylene (D) is in a range of 1.0 mass% or more and 20.0 mass% or less, provided that a sum of the contents of the polymer (A), the polymer (B), the polymer (C), and the low-density polyethylene (D) is 100 mass%:
(A-1) a melt flow rate measured at a temperature of 230°C and a load of 2.16 kg in accordance with JIS K 7210 is 0.1 to 60 g/10 min;
(A-2) a density measured in accordance with JIS K 7112 is 886 to 930 kg/m³;
(A-3) a melting point (Tm) obtained by differential scanning calorimetry (DSC) is 130°C to 170°C;
(B-1) a melt flow rate measured at a temperature of 230°C and a load of 2.16 kg in accordance with JIS K 7210 is 0.1 to 60 g/10 min;
(B-2) a density measured in accordance with JIS K 7112 is 855 to 885 kg/m³;
(B-3) a melting point (Tm) obtained by differential scanning calorimetry (DSC) is 130°C to 170°C;
(B-4) a Shore A hardness measured in accordance with ASTM D2240 is 65 to 90;
(C-1) a melt flow rate measured at a temperature of 230°C and a load of 2.16 kg in accordance with JIS K 7210 is 0.2 to 10 g/10 min;
(C-2) a density measured in accordance with JIS K 7112 is 855 to 913 kg/m³;
(C-3) a melting point (Tm) obtained by differential scanning calorimetry (DSC) is lower than 130°C;
(D-1) a melt flow rate measured at a temperature of 190°C and a load of 2.16 kg in accordance with JIS K 7210 is 0.1 to 50 g/10 min; and
(D-2) a density measured in accordance with JIS K 7112 is 914 to 935 kg/m³.

2. A laminated body comprising a layer containing the resin composition according to claim 1.

3. A packaging material comprising a layer containing the resin composition according to claim 1.
